# EUROPÄISCHE PATENTSCHRIFT

(11) **EP 3 576 997 B1**
(45) Veröffentlichungstag und Bekanntmachung des Hinweises auf die Patenterteilung: **14.04.2021**
(21) Anmeldenummer: 18702978.0
(22) Anmeldetag: 31.01.2018
(51) Int. Cl.: B60W 20/15, F02D 41/14, G01M 15/11, B60W 20/50, B60W 10/06, B60W 10/08

(54) **VERFAHREN ZUR REDUZIERUNG VON FEHLZÜNDUNGEN IM BETRIEB EINES KRAFTFAHRZEUGS**
METHOD FOR REDUCING MISFIRING DURING OPERATION OF A MOTOR VEHICLE
PROCÉDÉ DE RÉDUCTION DES RATÉS D'ALLUMAGE DANS LE FONCTIONNEMENT D'UN VÉHICULE AUTOMOBILE

(30) Priorität: 06.02.2017 DE 102017201854
(43) Veröffentlichungstag der Anmeldung: 11.12.2019
(73) Patentinhaber: Bayerische Motoren Werke Aktiengesellschaft, 80809 München (DE)
(72) Erfinder: JOHN, Frederik, 80796 München (DE); KNEBEL, Manuel, 80935 München (DE); MÜLLER, Peter, 81673 Muenchen (DE); RAMATSCHI, Stephan, 85604 Pöring (DE)
(86) Internationale Anmeldenummer: PCT/EP2018/052389
(87) Internationale Veröffentlichungsnummer: WO 2018/141788

(56) Entgegenhaltungen:
- EP-A1- 2 824 306
- DE-A1-102015 100 293
- US-A1- 2003 173 123
- US-A1- 2006 199 695
- US-A1- 2013 226 380

## Beschreibung

Die Erfindung betrifft ein Verfahren zur Reduzierung von Fehlzündungen im Betrieb eines Kraftfahrzeugs.

Es ist bekannt, dass Fehlzündungen in Verbrennungskraftmaschinen insbesondere von Kraftfahrzeugen auftreten können. Als Fehlzündung kommt insbesondere ein Klopfen in Betracht. Unter Klopfen ist eine unkontrolliert ausgelöste Verbrennung und/oder eine Selbstentzündung von Kraftstoff innerhalb eines Brennraums einer Verbrennungskraftmaschine zu verstehen. Weiterhin kommt ein Superklopfen als Fehlzündung in Betracht, das auch als Extremklopfen bezeichnet werden kann. Dabei handelt es sich um Klopfen, bei dem extreme Druckanstiege und extreme maximale Druckspitzenwerte im Brennraum auftreten und das nicht durch den Zündzeitpunkt beeinflusst werden kann. Auch kommen Glühzündungen in Betracht, bei denen sich das Kraftstoff-Luft-Gemisch an glühenden Bauteilen wie beispielsweise einem Einlass- oder Auslassventil entzünden kann Die US 2006/199695 A1 offenbart ein Verfahren zur Reduzierung von Fehlzündungen bei Unterschreiten einer minimalen Last.

Durch Fehlzündungen kann es zu erheblichen Schäden an der Verbrennungskraftmaschine kommen. Insbesondere können Kolben einer Verbrennungskraftmaschine durch Fehlzündungen beschädigt werden. Wird beispielsweise ein Kraftstoff-Luft-Gemisch in einem Brennraum von einem Kolben verdichtet, und entzündet sich das Kraftstoff-Luft-Gemisch als eine Fehlzündung, bevor der Kolben seinen Umkehrpunkt erreicht hat, wird die Bewegung des Kolbens durch die Fehlzündung abrupt verzögert. Das kann zu einer plastischen Verformung des Kolbens und gegebenenfalls sogar zum Kolbenbruch führen.

Es sind verschiedenste Maßnahmen bekannt, Fehlzündungen zu unterdrücken. Bekannte Maßnahmen sind aber oft nicht ausreichend wirkungsvoll.

Hiervon ausgehend ist es Aufgabe der hier vorliegenden Erfindung, die im Zusammenhang mit dem Stand der Technik geschilderten technischen Probleme zu lösen bzw. zumindest zu verringern. Es soll insbesondere ein besonders wirkungsvolles Verfahren zur Reduzierung von Fehlzündungen im Betrieb eines Kraftfahrzeugs vorgestellt werden.

Diese Aufgabe wird gelöst mit einem Verfahren gemäß den Merkmalen des Patentanspruchs 1. Weitere vorteilhafte Ausgestaltungen des Verfahrens sind in den abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Erfindungsgemäß wird ein Verfahren vorgestellt zur Reduzierung von Fehlzündungen im Betrieb eines Kraftfahrzeugs mit zumindest einer Verbrennungskraftmaschine und einem elektrischen Antriebsmotor, wobei das Kraftfahrzeug durch die Verbrennungskraftmaschine und den elektrischen Antriebsmotor jeweils anteilig angetrieben wird, wobei das Verfahren zumindest den folgenden Verfahrensschritt umfasst:
a) Bestimmen eines Risikofaktors für Fehlzündungen der Verbrennungskraftmaschine,
und wobei das Verfahren weiterhin mindestens einen der folgenden Verfahrensschritte umfasst:
b1) Bedarfsweises Erhöhen einer erzeugten Leistung der Verbrennungskraftmaschine wenn ein Lastzustand des Kraftfahrzeugs einer Niedriglastphase entspricht, um den Risikofaktor zu senken, und
b2) Bedarfsweises Absenken der erzeugten Leistung der Verbrennungskraftmaschine und Erhöhen der Leistung des elektrischen Antriebsmotors, wenn der Lastzustand des Kraftfahrzeugs einer Hochlastphase entspricht, um Fehlzündungen in der Hochlastphase zu verhindern.

In einer bevorzugten Ausführungsform umfasst das beschriebene Verfahren sowohl Schritt b1) als auch Schritt b2).

Der elektrische Antriebsmotor ist bevorzugt ein solcher der 48-V-Technologie und wird entsprechend bevorzugt mit einer Betriebsspannung von 48 V [Volt] betrieben. Alternativ ist es bevorzugt, dass der elektrische Antriebsmotor mit einer Betriebsspannung von 12 V [Volt] betrieben wird. Auch ist es bevorzugt, dass es sich bei dem elektrischen Antriebsmotor um einen solchen handelt, der für den Betrieb in einem (Voll-)hybridfahrzeug bestimmt und eingerichtet ist. Die Verbrennungskraftmaschine weist bevorzugt mindestens einen Brennraum auf, in dem Kraftstoff mit Luft verbrannt werden kann. Dabei kann es zu den weiter vorne beschriebenen Fehlzündungen kommen, die Schäden an der Verbrennungskraftmaschine und insbesondere an Kolben der Verbrennungskraftmaschine verursachen können.

Ob und inwieweit Fehlzündungen auftreten, kann von einer Vielzahl von Einflüssen innerhalb und außerhalb der Verbrennungskraftmaschine abhängen. Um eine Prognose bezüglich zu erwartender Fehlzündungen treffen zu können, wird in Schritt a) der Risikofaktor bestimmt. Der Risikofaktor ist ein Maß für Fehlzündungen, die in einer zukünftigen Betriebsphase erwartet werden. Insbesondere kann der Risikofaktor in einer Niedriglastphase bestimmt werden und dabei ein Maß dafür sein, wie wahrscheinlich Fehlzündungen in einer anschließenden Hochlastphase auftreten werden.

Es kann davon ausgegangen werden, dass es in einer Niedriglastphase aufgrund der vorherrschenden Temperatur- und Druckverhältnisse zu keinen Fehlzündungen kommt. Daher ist es bevorzugt, dass in einer Niedriglastphase Maßnahmen ergriffen werden, um Fehlzündungen in zukünftigen Hochlastphasen zu verhindern. Das bedeutet, dass der Risikofaktor in Niedriglastphasen bevorzugt minimiert wird. In einer Hochlastphase kann es hingegen zu Fehlzündungen kommen. Es kann aber angenommen werden, dass der Risikofaktor in einer Hochlastphase aufgrund der vorherrschenden Temperatur- und Druckverhältnisse ohnehin sinkt. Daher ist es bevorzugt, dass in einer Hochlastphase Maßnahmen ergriffen werden, um Fehlzündungen tatsächlich (und nicht etwa zukünftig) zu verhindern.

Die Bestimmung des Risikofaktors in Schritt a) umfasst bevorzugt zumindest die Bestimmung eines Ausmaßes (also insbesondere einer Dichte, einer Größe, einer Masse und/oder eines Volumens) von Ablagerungen in Brennräumen der Verbrennungskraftmaschine. Dazu kann insbesondere ein Ablagerungsmodell verwendet werden, in dem ein Ablagerungsaufbau und/oder ein Ablagerungsabbau in den Brennräumen modelliert ist. In das Ablagerungsmodell können insbesondere die folgenden Faktoren eingehen: eine Kraftstoffqualität, ein Betriebspunktparameter der Verbrennungskraftmaschine (wie beispielsweise eine Drehzahl, eine Last und/oder eine Leistung der Verbrennungskraftmaschine), eine oder mehrere Betriebsbedingungen der Verbrennungskraftmaschine (insbesondere das Vorliegen eines gedrosselten oder ungedrosselten Betriebs, eine Temperatur der Verbrennungskraftmaschine, ein Grad einer Ventilüberschneidung, eine Abgasrückführrate, Einspritzparameter wie beispielsweise eine Anzahl an Einspritzungen und/oder eine Einspritzmengenaufteilung, ein oder mehrere Adaptionswerte und/oder ein oder mehrere Zündungsparameter wie beispielsweise eine Zündenergie und eine Anzahl an Zündfunken).

Beispielsweise kann der Risikofaktor als mathematische Funktion vorgegeben sein, die von einem oder mehreren der genannten Parameter abhängt. Die mathematische Funktion kann insbesondere durch Versuche für eine bestimmte Verbrennungskraftmaschine (beziehungsweise für einen bestimmten serienmäßig hergestellten Typ von Verbrennungskraftmaschine) ermittelt und in der Steuereinheit gespeichert werden. Beispielsweise kann in Abhängigkeit der entsprechenden Parameter untersucht werden, mit welcher Wahrscheinlichkeit Fehlzündungen zu einem vorgegebenen Zeitpunkt auftreten. Die so bestimmte Wahrscheinlichkeit kann als der Risikofaktor (in Abhängigkeit von den entsprechenden Parametern) in der Steuereinheit gespeichert werden.

Neben oder alternativ zum Ablagerungsverhalten können ein oder mehrere der folgenden weiteren Einflussfaktoren (unmittelbar) in die Bildung des Risikofaktors eingehen: eine Kraftstoffqualität (insbesondere einer aktuellen Tankfüllung), ein oder mehrere Betriebspunktparameter der Verbrennungskraftmaschine (wie beispielsweise eine Drehzahl, eine Last und/oder eine Leistung der Verbrennungskraftmaschine), eine Umgebungstemperatur, Einträge in einem Fehlerspeicher (die beispielsweise Informationen über in der Vergangenheit detektierte Fehlzündungen umfassen), eine Dauer des Betriebs der Verbrennungskraftmaschine (also die seit dem Start der Verbrennungskraftmaschine vergangene Zeit), ein Alter der Verbrennungskraftmaschine (in Form einer Zeit- und/oder Kilometerstandsangabe) und/oder eine seit der letzten Wartung vergangene Zeit.

Bevorzugt wird Schritt a) während des gesamten Betriebs des Kraftfahrzeugs durchgeführt. Je nach Bedarf werden parallel dazu die Schritte b1) beziehungsweise b2) durchgeführt. Dass der Schritt b1) bedarfsweise durchgeführt wird, bedeutet insbesondere, dass Schritt b1) mit einer Dauer und in einem Ausmaß durchgeführt wird, so dass der gemäß Schritt a) bestimmte Risikofaktor in einem gewünschten Maße gesenkt wird. Dass Schritt b2) bedarfsweise durchgeführt wird, bedeutet insbesondere, dass Schritt b2) mit einer Dauer und einem Ausmaß durchgeführt wird, so dass auch während der Hochlastphase keine Fehlzündungen auftreten.

Der Lastzustand des Kraftfahrzeugs ergibt sich insbesondere durch den Antrieb des Kraftfahrzeugs. Diese Last verteilt sich anteilig auf die Verbrennungskraftmaschine und den elektrischen Antriebsmotor. Die Begriffe Niedriglastphase und Hochlastphase sind hier insbesondere relativ zueinander definiert. Das bedeutet, dass eine Hochlastphase sich insbesondere dadurch auszeichnet, dass der Lastzustand des Kraftfahrzeugs höher ist als in einer Niedriglastphase. In einer Niedriglastphase liegt bevorzugt insbesondere ein derartiger Lastzustand des Kraftfahrzeugs vor, bei dem eine signifikante Erhöhung der Leistung der Verbrennungskraftmaschine möglich ist (so dass die Verbrennungskraftmaschine also nicht bereits mit voller Leistung betrieben wird).

Fehlzündungen können insbesondere bei einer hohen Leistung der Verbrennungskraftmaschine auftreten, weil die dabei vorliegenden hohen Drücke und Temperaturen in den Brennräumen bereits den Bedingungen nahekommen, die für eine Entzündung von Kraftstoff vorliegen müssen. Außerdem können Ablagerungen innerhalb der Brennräume Fehlzündungen begünstigen. Das liegt insbesondere daran, dass Ablagerungen auch einige Zeit nach einer Verbrennung von Kraftstoff in einem Brennraum glühen können, wodurch Kraftstoff in folgenden Takten unkontrolliert entzündet werden kann. Ablagerungen können insbesondere in Niedriglastphasen gebildet und in Hochlastphasen abgebaut werden.

In Schritt b1) kann der Bildung von Ablagerungen in einer Niedriglastphase entgegengewirkt werden, indem die Leistung der Verbrennungskraftmaschine erhöht wird. Dabei ist unter einer Erhöhung der Leistung zu verstehen, dass die Leistung im Vergleich zu einer ohne Eingriff gemäß Schritt b1) vorliegenden Leistung erhöht wird. Durch diese Maßnahme kann der Risikofaktor gesenkt werden. Die Maßnahme gemäß Schritt b1) wird insbesondere bevorzugt auch dann durchgeführt, wenn in der momentan vorliegenden Niedriglastphase keine Fehlzündungen auftreten. Durch eine bei Niedriglast gemäß Schritt b1) durchgeführte Maßnahme kann insbesondere der Aufbau von Ablagerungen unterdrückt werden, wodurch das Risiko von Fehlzündungen in einer späteren Hochlastphase gesenkt werden kann. Die von dem elektrischen Antriebsmotor erzeugte Leistung kann durch Schritt b1) unverändert bleiben oder verändert werden. Die von der Verbrennungskraftmaschine und dem elektrischen Antriebsmotor zusammen erzeugte Leistung kann gemäß Schritt b1) konstant bleiben oder erhöht werden.

In Schritt b2) kann Fehlzündungen entgegengewirkt werden, indem die von der Verbrennungskraftmaschine erzeugte Leistung abgesenkt wird. Dabei ist unter einer Absenkung der Leistung zu verstehen, dass die Leistung im Vergleich zu einer ohne Eingriff gemäß Schritt b2) vorliegenden Leistung abgesenkt wird. Durch diese Maßnahme können Fehlzündungen in der Hochlastphase verhindert werden. Um die zum Antrieb des Kraftfahrzeugs und von der Verbrennungskraftmaschine und dem elektrischen Antriebsmotor zusammen erzeugte Leistung auch trotz Absenkung der Leistung der Verbrennungskraftmaschine zu erzeugen, wird gemäß Schritt b2) die erzeugte Leistung des elektrischen Antriebsmotors gesteigert. Es ist besonders bevorzugt, dass in Schritt b2) eine Leistung des elektrischen Antriebsmotors zumindest zeitweise derart erhöht wird, dass die Absenkung der von der Verbrennungskraftmaschine erzeugten Leistung ausgeglichen wird. Die von der Verbrennungskraftmaschine und dem elektrischen Antriebsmotor zusammen erzeugte Leistung bleibt durch Schritt b2) damit bevorzugt unverändert. Alternativ ist auch bevorzugt, dass die von der Verbrennungskraftmaschine und dem elektrischen Antriebsmotor zusammen erzeugte Leistung durch Schritt b2) jedenfalls nicht abgesenkt wird. Dadurch kann gewährleistet werden, dass sich ein Eingriff gemäß dem beschriebenen Verfahren nicht zu einem von dem Fahrer des Kraftfahrzeugs ungewünschten Leistungsabfall führt.

Gemäß Stand der Technik (und damit insbesondere ohne einen Eingriff nach dem hier beschriebenen Verfahren) werden Kraftfahrzeuge mit Verbrennungskraftmaschine und elektrischem Antriebsmotor in Hochlastphasen regelmäßig hauptsächlich oder sogar ausschließlich von der Verbrennungskraftmaschine angetrieben. Das ist deshalb der Fall, weil eine Verbrennungskraftmaschine insbesondere zum Antrieb des Kraftfahrzeugs bei hoher Last und/oder bei hoher Geschwindigkeit des Kraftfahrzeugs geeignet ist. Bei einer Fahrt mit Höchstgeschwindigkeit kann das Kraftfahrzeug beispielsweise ausschließlich von der Verbrennungskraftmaschine angetrieben werden. Eine Fahrt mit hoher Geschwindigkeit findet regelmäßig in Bereichen außerhalb von Städten und insbesondere auf Autobahnen statt. Dabei ist ein Einfluss von umweltschädlichen Emissionen wie beispielsweise von Schall und/oder von Schadstoffen durch die Verbrennungskraftmaschine regelmäßig geringer als beispielsweise bei einer Fahrt in einer dicht besiedelten Stadt. Bei langsamer Fahrt wird das Kraftfahrzeug entsprechend regelmäßig insbesondere von dem elektrischen Antriebsmotor angetrieben.

Überraschenderweise hat sich in Versuchen gezeigt, dass es entgegen dem beschriebenen üblichen und sehr weit verbreiteten Vorgehen vorteilhaft sein kann, die Last der Verbrennungskraftmaschine in einer Niedriglastphase zu erhöhen.

Bevorzugt wird das beschriebene Verfahren mit einer Steuereinheit des Kraftfahrzeugs durchgeführt. Die Steuereinheit ist bevorzugt an mindestens einen Sensor angebunden, mit dem Daten gemessen werden können, die für die Bestimmung des Risikofaktors verwendet werden können. Vorzugsweise werden bei der Bestimmung des Risikofaktors Daten von Sensoren und/oder Modellwerte verwendet. Das kann insbesondere durch Einsetzen in eine ein- oder mehrdimensionale (mathematische) Funktion erfolgen. Zur Bestimmung des Risikofaktors weist die Steuereinheit bevorzugt eine entsprechende Software auf. Die Veränderung der Leistung der Verbrennungskraftmaschine beziehungsweise des elektrischen Antriebsmotors erfolgt bevorzugt ebenfalls durch die Steuereinheit. Dazu können beispielsweise eine in die Verbrennungskraftmaschine eingebrachte Kraftstoff- und/oder Luftmenge beziehungsweise ein in den elektrischen Antriebsmotor eingeleiteter elektrischer Strom beeinflusst werden.

Im Rahmen des Verfahrens wird Schritt b1) insoweit durchgeführt, dass der Risikofaktor innerhalb eines vorgegebenen Wertebereichs liegt.

Liegt der Risikofaktor oberhalb des Grenzwertes, wird bevorzugt Schritt b1) durchgeführt. Der Grenzwert kann als fester Wert oder in der Form vorgegeben sein, dass der Grenzwert mit Parametern berechenbar ist, die Umgebungseinflüsse und/oder einen Betriebszustand der Verbrennungskraftmaschine, des elektrischen Antriebsmotors und/oder des Kraftfahrzeugs charakterisieren.

Dass Schritt b1) bedarfsweise durchgeführt wird, bedeutet dabei insbesondere, dass Schritt b1) mit einer Dauer und in einem Ausmaß durchgeführt wird, so dass der Risikofaktor während des gesamten Betriebs des Kraftfahrzeugs möglichst unter dem Grenzwert liegt.

In einer weiteren bevorzugten Ausführungsform des Verfahrens umfasst die Bestimmung des Risikofaktors in Schritt a) zumindest eine Integration eines Änderungsparameters, welcher die Beeinflussung des Risikofaktors durch den aktuellen Betriebszustand der Verbrennungskraftmaschine wiedergibt.

Der Änderungsparameter ist bevorzugt ein Maß für eine Änderung des Risikofaktors. Beispielsweise kann der Risikofaktor auf die weiter vorne beschriebene Weise über eine bestimmte Zeit ermittelt werden, wobei aus dem zeitlichen Verlauf des Risikofaktors der Änderungsparameter durch mathematisches Ableiten ermittelt werden kann. Der zeitliche Verlauf des Änderungsparameters kann extrapoliert werden, beispielsweise durch lineare Extrapolation. Aus dem so erhaltenen erwarteten zukünftigen Änderungsparameter kann durch mathematische Integration ein für die nahe Zukunft erwarteter Risikofaktor erhalten werden.

Alternativ kann der Änderungsparameter beispielsweise aus dem Ablagerungsmodell berechnet werden.

In einer weiteren bevorzugten Ausführungsform des Verfahrens wird in Schritt b1) eine Leistung des elektrischen Antriebsmotors abgesenkt.

Die Reduzierung des Risikofaktors gemäß Schritt b1) kann insbesondere durch die Erhöhung der von der Verbrennungskraftmaschine erzeugten Leistung erreicht werden. Es kann davon ausgegangen werden, dass die von dem elektrischen Antriebsmotor erzeugte Leistung keinen unmittelbaren Einfluss auf Fehlzündungen in der Verbrennungskraftmaschine hat. Gemäß dieser Ausführungsform ist es bevorzugt, dass die Leistung des elektrischen Antriebsmotors gesenkt wird. Insbesondere ist es bevorzugt, dass die Leistung des elektrischen Antriebsmotors in einem solchen Maße gesenkt wird, dass die von der Verbrennungskraftmaschine und von dem elektrischen Antriebsmotor zusammen erzeugte Leistung durch den Eingriff gemäß Schritt b1) konstant bleibt. In dem Fall entspricht ein Eingriff gemäß Schritt b1) einer Umverteilung der erzeugten Leistung von dem elektrischen Antriebsmotor zur Verbrennungskraftmaschine.

In einer weiteren bevorzugten Ausführungsform des Verfahrens wird der elektrische Antriebsmotor in Schritt b1) vollständig abgeschaltet.

In dieser Ausführungsform ist es bevorzugt, dass die Leistung der Verbrennungskraftmaschine in Schritt b1) zumindest insoweit erhöht wird, als dass die zu dem Zeitpunkt von dem elektrischen Antriebsmotor erzeugte Leistung vollständig ausgeglichen werden kann. Damit kann erreicht werden, dass die von der Verbrennungskraftmaschine und von dem elektrischen Antriebsmotor zusammen erzeugte Leistung durch den Eingriff gemäß Schritt b1) jedenfalls nicht absinkt. Wird die Leistung der Verbrennungskraftmaschine gerade soweit erhöht, dass von der Verbrennungskraftmaschine und von dem elektrischen Antriebsmotor zusammen erzeugte Leistung durch den Eingriff gemäß Schritt b1) konstant bleibt, so wird gemäß dieser Ausführungsform durch Schritt b1) die Leistung in maximal möglichem Umfang von dem elektrischen Antriebsmotor auf die Verbrennungskraftmaschine übertragen.

In einer weiteren bevorzugten Ausführungsform des Verfahrens ist die nach Durchführung von Schritt b1) vorliegende Leistung, die von der Verbrennungskraftmaschine und dem elektrischen Antriebsmotor zusammen erzeugt wird, größer als eine für den Antrieb des Kraftfahrzeugs momentan benötigte Leistung, wobei eine für den Antrieb des Kraftfahrzeugs nicht benötigte Energie mit dem elektrischen Antriebsmotor oder einem anderen Generator im Kraftfahrzeug in elektrische Energie umgewandelt und gespeichert wird.

Die für den Antrieb des Kraftfahrzeugs momentan benötigte Leistung hängt insbesondere von einem Fahrerwunsch ab und kann insbesondere durch eine Stellung eines Gaspedals eingestellt werden. Wird in Schritt b1) die Leistung der Verbrennungskraftmaschine erhöht und die Leistung des elektrischen Antriebsmotors nicht in gleichem Maße abgesenkt, so kann die von der Verbrennungskraftmaschine und dem elektrischen Antriebsmotor momentan zusammen erzeugte Leistung die für den Antrieb des Kraftfahrzeugs momentan benötigte Leistung übersteigen. Eine derartige überschüssige Leistung kann gespeichert werden und beispielsweise zu einem späteren Zeitpunkt für den Betrieb des elektrischen Antriebsmotors verwendet werden.

Insbesondere ist in dieser Ausführungsform bevorzugt, dass der elektrische Antriebsmotor in Schritt b1) vollständig abgeschaltet wird. Andernfalls würde der elektrische Antriebsmotor zur insgesamt erzeugten Leistung beitragen, wobei gleichzeitig der für den Antrieb des Kraftfahrzeugs nicht benötigte Anteil dieser Leistung wieder in elektrische Energie umgewandelt und gespeichert würde. Das ist zwar möglich, insbesondere wenn die Umwandlung der nicht benötigten Energie durch einen Generator und nicht durch den elektrischen Antriebsmotor erfolgt. Allerdings ist davon auszugehen, dass dieses Vorgehen energetisch ineffizient ist. Bevorzugt wird der elektrische Antriebsmotor in dieser Ausführungsform also nur dann nicht ausgeschaltet, wenn besondere Umstände vorliegen, die einem Ausschalten entgegenstehen würden.

Insbesondere kann die in Schritt b1) gespeicherte elektrische Energie zur Durchführung von Schritt b2) verwendet werden.

In einer weiteren bevorzugten Ausführungsform des Verfahrens wird in Schritt b2) die Leistung des elektrischen Antriebsmotors zumindest zeitweise auf eine maximale Leistung des elektrischen Antriebsmotors erhöht.

Wird die Leistung des elektrischen Antriebsmotors maximal erhöht, kann die von der Verbrennungskraftmaschine erzeugte Leistung entsprechend in besonders großem Maße abgesenkt werden. Damit können Fehlzündungen gemäß Schritt b2) besonders gut verhindert werden. Je nach Steigerung des von dem elektrischen Antriebsmotor erzeugten Drehmoments kann das von der Verbrennungskraftmaschine erzeugte Drehmoment gesenkt werden. Nicht nur die maximale Absenkung des von dem elektrischen Antriebsmotor erzeugten Drehmoments ist bevorzugt. Auch Zwischenzustände können sinnvoll sein. Beispielweise kann das von der Verbrennungskraftmaschine erzeugte Drehmoment bei einer länger andauernden Beschleunigungsphase beispielsweise bei einer Autobahnauffahrt für längere Zeit leicht abgesenkt werden. Das kann in einem solchen Fall sinnvoller sein als eine kurzzeitige Absenkung um einen großen Betrag. Das kann insbesondere daran liegen, dass ein Speicher für elektrische Energie bei einer kurzzeitigen Absenkung um einen großen Betrag schnell entladen sein kann, so dass die Verbrennungskraftmaschine anschließend das gesamte Drehmoment aufbringen muss, wobei es zu vermehrt Fehlzündungen kommen könnte.

Die durch die Maßnahme des Schritts b1) erwartete Veränderung des Risikofaktors wird bevorzugt in der Steuereinheit unter Verwendung einer entsprechenden Software abgeschätzt. Dazu wird bevorzugt ein erwarteter Risikofaktor gemäß dem für Schritt a) beschriebenen Verfahren bestimmt. Für die dabei verwendeten Parameter werden bevorzugt Werte eingesetzt, die nach einem möglichen Eingriff gemäß Schritt b1) erwartet werden. Beispielsweise kann für die Drehzahl der Verbrennungskraftmaschine ein Wert eingesetzt werden, der sich bei einem möglichen Eingriff ergeben könnte. Bevorzugt wird eine derartige Abschätzung für eine Vielzahl möglicher Eingriffe gemäß Schritt b1) durchgeführt. Aus dieser Vielzahl möglicher Eingriffe wird bevorzugt der Eingriff ausgewählt, für den sowohl ein möglichst niedriger erwarteter Risikofaktor bestimmt wurde, für den aber zugleich auch zu erwartende negative Einflüsse besonders gering sind. Als derartige negative Einflüsse kommt beispielsweise in Betracht, dass durch eine Erhöhung der Leistung des elektrischen Antriebsmotors gespeicherte elektrische Energie in besonders großem Umfang verbraucht wird. Auch können durch eine Erhöhung der Leistung der Verbrennungskraftmaschine Schadstoffemissionen gesteigert werden. Bevorzugt werden die zu erwartenden negativen Einflüsse und die zu erwartende Reduzierung des Risikofaktors nach einem zuvor festgelegten (und beispielsweise in der Steuereinheit gespeicherten) Schema gegeneinander abgewogen.

Als weiterer Aspekt der Erfindung wird ein Kraftfahrzeug mit zumindest einer Verbrennungskraftmaschine und einem elektrischen Antriebsmotor vorgestellt, wobei das Kraftfahrzeug durch die Verbrennungskraftmaschine und den elektrischen Antriebsmotor jeweils anteilig antreibbar ist, und wobei das Kraftfahrzeug dazu eingerichtet ist, zur Reduzierung von Fehlzündungen in der Verbrennungskraftmaschine ein Verfahren nach einem der vorhergehenden Ansprüche durchzuführen.

Die weiter vorne für das Verfahren beschriebenen besonderen Vorteile und Ausgestaltungsmerkmale sind auf das beschriebene Kraftfahrzeug anwendbar und übertragbar.

## Patentansprüche

1. Verfahren zur Reduzierung von Fehlzündungen im Betrieb eines Kraftfahrzeugs mit zumindest einer Verbrennungskraftmaschine und einem elektrischen Antriebsmotor, wobei das Kraftfahrzeug durch die Verbrennungskraftmaschine und den elektrischen Antriebsmotor jeweils anteilig angetrieben wird, wobei das Verfahren zumindest den folgenden Verfahrensschritt umfasst:
a) Bestimmen eines Risikofaktors, der ein Maß für Fehlzündungen der Verbrennungskraftmaschine, die in einer zukünftigen Betriebsphase der Verbrennungskraftmaschine erwartet werden, ist,
und wobei das Verfahren weiterhin die folgenden Verfahrensschritte umfasst:
b1) Bedarfsweises Erhöhen einer erzeugten Leistung der Verbrennungskraftmaschine, wenn ein Lastzustand des Kraftfahrzeugs einer Niedriglastphase entspricht, um den Risikofaktor zu senken, wobei Schritte b1) insoweit durchgeführt wird, dass der Risikofaktor innerhalb eines vorgegebenen Wertebereichs liegt und
b2) Bedarfsweises Absenken der erzeugten Leistung der Verbrennungskraftmaschine und Erhöhen der Leistung des elektrischen Antriebsmotors, wenn der Lastzustand des Kraftfahrzeugs einer Hochlastphase entspricht, um Fehlzündungen in der Hochlastphase zu verhindern.

2. Verfahren nach einem der vorhergehenden Ansprüche, wobei die Bestimmung des Risikofaktors in Schritt a) zumindest eine Integration eines Änderungsparameters umfasst, welcher die Beeinflussung des Risikofaktors durch den aktuellen Betriebszustand der Verbrennungskraftmaschine wiedergibt.

3. Verfahren nach einem der vorhergehenden Ansprüche, wobei in Schritt b1) eine Leistung des elektrischen Antriebsmotors abgesenkt wird.

4. Verfahren nach einem der vorhergehenden Ansprüche, wobei der elektrische Antriebsmotor in Schritt b1) vollständig abgeschaltet wird.

5. Verfahren nach einem der vorhergehenden Ansprüche, wobei die nach Durchführung von Schritt b1) vorliegende Leistung, die von der Verbrennungskraftmaschine und dem elektrischen Antriebsmotor zusammen erzeugt wird, größer ist als eine für den Antrieb des Kraftfahrzeugs momentan benötigte Leistung, wobei eine für den Antrieb des Kraftfahrzeugs nicht benötigte Energie mit dem elektrischen Antriebsmotor oder einem anderen Generator im Kraftfahrzeug in elektrische Energie umgewandelt und gespeichert wird.

6. Verfahren nach einem der vorhergehenden Ansprüche, wobei in Schritt b2) eine Leistung des elektrischen Antriebsmotors zumindest zeitweise derart erhöht wird, dass die Absenkung der von der Verbrennungskraftmaschine erzeugten Leistung ausgeglichen wird.

7. Verfahren nach einem der vorhergehenden Ansprüche, wobei in Schritt b2) die Leistung des elektrischen Antriebsmotors zumindest zeitweise auf eine maximale Leistung des elektrischen Antriebsmotors erhöht wird.

8. Kraftfahrzeug mit zumindest einer Verbrennungskraftmaschine und einem elektrischen Antriebsmotor, wobei das Kraftfahrzeug durch die Verbrennungskraftmaschine und den elektrischen Antriebsmotor jeweils anteilig antreibbar ist, und wobei das Kraftfahrzeug dazu eingerichtet ist, zur Reduzierung von Fehlzündungen in der Verbrennungskraftmaschine ein Verfahren nach einem der vorhergehenden Ansprüche durchzuführen.

## Claims

1. Method for reducing misfiring during the operation of a motor vehicle with at least an internal combustion engine and an electric drive motor, wherein the motor vehicle is driven in each case proportionately by the internal combustion engine and the electric drive motor, wherein the method comprises at least the following method step:
a) determining a risk factor which is a measure of misfiring of the internal combustion engine that is expected in a future operating phase of the internal combustion engine,
and wherein the method furthermore comprises the following method steps:
b1) increasing a generated power of the internal combustion engine in accordance with requirement, if a load state of the motor vehicle corresponds to a low-load phase, in order to lower the risk factor, wherein step b1) is performed insofar as the risk factor lies within a predefined value range, and
b2) lowering the generated power of the internal combustion engine, and increasing the power of the electric drive motor, in accordance with requirement if the load state of the motor vehicle corresponds to a high-load phase, in order to prevent misfiring in the high-load phase.

2. Method according to any of the preceding claims, wherein the determination of the risk factor in step a) comprises at least an integration of a change parameter which reflects the influencing of the risk factor by the present operating state of the internal combustion engine.

3. Method according to either of the preceding claims, wherein, in step b1), a power of the electric drive motor is lowered.

4. Method according to any of the preceding claims, wherein the electric drive motor is completely deactivated in step b1).

5. Method according to any of the preceding claims, wherein the power present after the execution of step b1), which power is generated by the internal combustion engine and the electric drive motor together, is greater than a power presently required for the drive of the motor vehicle, wherein energy not required for the drive of the motor vehicle is converted by means of the electric drive motor or some other generator in the motor vehicle into electrical energy and is stored.

6. Method according to any of the preceding claims, wherein, in step b2), a power of the electric drive motor is at least temporarily increased such that the lowering of the power generated by the internal combustion engine is compensated.

7. Method according to any of the preceding claims, wherein, in step b2), the power of the electric drive motor is at least temporarily increased to a maximum power of the electric drive motor.

8. Motor vehicle having at least an internal combustion engine and an electric drive motor, wherein the motor vehicle is driveable in each case proportionately by the internal combustion engine and the electric drive motor, and wherein the motor vehicle is configured to carry out a method according to any of the preceding claims in order to reduce misfiring in the internal combustion engine.

## Revendications

1. Procédé de réduction des ratés d'allumage dans le fonctionnement d'un véhicule automobile comprenant au moins un moteur à combustion interne et un moteur d'entraînement électrique, le véhicule automobile étant entraîné à chaque fois en partie par le moteur à combustion interne et par le moteur d'entraînement électrique, le procédé comprenant au moins l'étape de procédé suivante :
a) détermination d'un facteur de risque qui constitue une mesure des ratés d'allumage du moteur à combustion interne auxquels on s'attend dans une phase de fonctionnement future du moteur à combustion interne,
et le procédé comprenant en outre les étapes de procédé suivantes :
b1) augmentation au besoin d'une puissance générée du moteur à combustion interne lorsqu'un état de charge du véhicule automobile correspond à une phase de charge faible afin de réduire le facteur de risque, l'étape b1) étant effectuée de manière à ce que le facteur de risque reste à l'intérieur d'une plage de valeurs prédéfinie et
b2) réduction au besoin de la puissance générée du moteur à combustion interne et augmentation de la puissance du moteur d'entraînement électrique lorsque l'état de charge du véhicule automobile correspond à une phase de charge élevée afin d'éviter des ratés d'allumage dans la phase de charge élevée.

2. Procédé selon l'une quelconque des revendications précédentes, dans lequel la détermination du facteur de risque à l'étape a) comprend au moins une intégration d'un paramètre de variation qui reproduit l'influence du facteur de risque par l'état de fonctionnement actuel du moteur à combustion interne.

3. Procédé selon l'une quelconque des revendications précédentes, dans lequel une puissance du moteur d'entraînement électrique est réduite à l'étape b1) .

4. Procédé selon l'une quelconque des revendications précédentes, dans lequel le moteur d'entraînement électrique à l'étape b1) est complètement coupé.

5. Procédé selon l'une quelconque des revendications précédentes, dans lequel la puissance présente après la mise en œuvre de l'étape b1), laquelle puissance est générée conjointement par le moteur à combustion interne et par le moteur d'entraînement électrique, est supérieure à une puissance nécessaire momentanément pour l'entraînement du véhicule automobile, et une énergie non nécessaire pour l'entraînement du véhicule automobile est convertie en énergie électrique et stockée avec le moteur d'entraînement électrique ou avec un autre générateur dans le véhicule automobile.

6. Procédé selon l'une quelconque des revendications précédentes, dans lequel une puissance du moteur d'entraînement électrique est au moins temporairement augmentée à l'étape b2) de manière à compenser la réduction de la puissance générée par le moteur à combustion interne.

7. Procédé selon l'une quelconque des revendications précédentes, dans lequel la puissance du moteur d'entraînement électrique est au moins temporairement augmentée jusqu'à une puissance maximale du moteur d'entraînement électrique à l'étape b2).

8. Véhicule automobile comprenant au moins un moteur à combustion interne et un moteur d'entraînement électrique, le véhicule automobile pouvant être entraîné à chaque fois en partie par le moteur à combustion interne et par le moteur d'entraînement électrique, et le véhicule automobile étant prévu pour mettre en œuvre un procédé selon l'une quelconque des revendications précédentes pour réduire des ratés d'allumage dans le moteur à combustion interne.
